# EUROPÄISCHE PATENTANMELDUNG

(11) **EP 2 141 692 A1**
(43) Veröffentlichungstag der Anmeldung: **06.01.2010**
(21) Anmeldenummer: 08159111.7
(22) Anmeldetag: 26.06.2008
(51) Int. Cl.: G10L 15/26

(54) **Automatisierte Sprachgesteuerte Unterstützung eines Benutzers**

(71) Anmelder: Deutsche Telekom AG, 53113 Bonn (DE); Technische Universität Berlin, 10623 Berlin (DE)
(72) Erfinder: Markefka, Guntbert, 30167 Hannover (DE); Liedtke, Klaus-Dieter, 31582 Nienburg (DE); Lopez Monjo, Vicente Manuel, 53604 Bad Honnef (DE); Metze, Florian, 10555 Berlin (DE)
(74) Vertreter: Vossius & Partner

(57) **Zusammenfassung**

Eine Informationsvorrichtung (1) zur sprachgesteuerten Unterstützung eines Benutzers umfasst ein Speichermedium (8), eine Wissensdatenbank (2), eine Recheneinheit (5), ein Eingabegerät (10), Aufzeichnungsmittel (9) und eine Transkriptionseinrichtung (4, 7). Dabei ist ein vom Eingabegerät (10) erfasstes Signal von den Aufzeichnungsmitteln (9) mittels der Recheneinheit (5) im Speichermedium (8) speicherbar und das Signal von der Transkriptionseinrichtung (4, 7) mittels der Recheneinheit (5) in einen korrespondierenden Text umwandelbar und im Speichemedium (8) speicherbar. Die Informationsvorrichtung (1) weist weiter eine ontologische Analyseeinrichtung (3) auf, mit welcher der Text mittels der Recheneinheit (5) unter Einbezug der Wissensdatenbank (2) kategorisierbar ist und mit welcher der Text unter Einbezug dieser Kategorisierung und der Wissensdatenbank (2) mittels der Recheneinheit (5) aufbereitbar ist. Mit einer solchen Informationsvorrichtung (1) kann der Text effizient und mit einer hohen Qualität spezifisch aufbereitet werden, so dass der Benutzer mit der erfindungsgemäßen Informationsvorrichtung effizient unterstützt werden kann.

## Beschreibung

### Technisches Gebiet

Die Erfindung betrifft eine Infonmationsvorrichtung gemäß dem Oberbegriff des unabhängigen Patentanspruchs 1 sowie ein Verfahren zur sprachgesteuerten Unterstützung eines Benutzers und ein Computerprogramm zur Durchführung eines solchen Verfahrens. Solche Informationsvorrichtungen mit einem Speichermedium, einer Wissensdatenbank, einer Recheneinheit, einem Eingabegerät, Aufzeichnungsmitteln und einer Transkriptionseinrichtung, wobei ein vom Eingabegerät erfasstes Signal von den Aufzeichnungsmitteln mittels der Recheneinheit im Speichermedium speicherbar ist und wobei das Signal von der Transkriptionseinrichtung mittels der Recheneinheit in einen korrespondierenden Text umwandelbar und im Speichermedium speicherbar ist, können zur sprachgesteuerten Unterstützung eines Benutzers eingesetzt werden.

### Stand der Technik

Zur automatisierten Unterstützung von Benutzern, wie beispielsweise von Kunden eines Unternehmen, werden heute Informationsvorrichtungen eingesetzt, die typischerweise Anliegen der Benutzer über Sprachportale verarbeiten, die eine Sprachbenutzerschnittstelle (VUI) zur Interaktion mit den Benutzern aufweisen. Dabei sind in den Informationsvorrichtungen häufig spezifische Geschäftsprozesse des Betreibers der Inforinationsvorrichtung, wie beispielsweise ein Unternehmen und insbesondere ein Telekommunikationsuntemehmen, hinterlegt, mittels derer die Anliegen der Benutzer im Idealfall abschließend verarbeitet werden können. Die Interaktion mit den Benutzern erfolgt häufig mittels der VUI über natürliche Spracherkennung (NLU), wie sie beispielsweise in der WO 2004/003888 A1 beschrieben ist.

Obwohl sich die Leistungsfähigkeit solcher Informationsvorrichtungen, beispielsweise in Bezug auf die Menge hinterlegter Geschäftsprozesse, in Bezug auf die Verarbeitungsgeschwindigkeit und/oder in Bezug auf die Interaktion mit dem Benutzer, laufend verbessert, können heute häufig Anliegen der Benutzer nur zusammen mit menschlichen Beratern abschließend verarbeitet werden. Dabei werden die Benutzer beispielweise an einem bestimmten Punkt in der Verarbeitung des Kundenanliegens von der Informationsvomchtung mit einem geeigneten Berater verbunden. Insbesondere bei der Unterstützung von Benutzern in komplexen Themengebieten, wie beispielsweise einer umfassenden Unterstützung im Gebiet der Telekommunikation, können verhältnismäßig wenige Anliegen abschließend automatisiert verarbeitet werden. Entsprechend müssen zur Unterstützung der Benutzer dabei verhältnismäßig viele gut geschulte Berater vom Betreiber zur Verfügung gestellt werden, was aufwändig und teuer sein kann.

Um zu verhindern, dass der Benutzer die Unterstützung abbricht bevor sein Anliegen abschließend verarbeitet wurde, ist es wichtig, dass die Informationsvorrichtung den richtigen Punkt zur Verbindung des Benutzers mit einem geeigneten Berater erkennt. Abgebrochene Unterstützungen können zu verärgerten Benutzern führen und den Betreiber eventuell somit beeinträchtigen. Bei der automatisierten Auswahl des geeigneten Beraters werden heute häufig die aus der Unterstützung des Benutzers gesammelten Information nicht oder zuwenig effizient ausgewertet, so dass viele Benutzer nicht direkt mit dem geeigneten Benutzer sondern über mehrfaches menschliches Weiterleiten mit dem geeigneten Berater verbunden werden. Dies kann einerseits wiederum zur Verärgerung der Benutzer beitragen und andererseits einen verhältnismäßig hohen Aufwand bei der Unterstützung des Benutzers verursachen.

Es besteht somit ein Bedarf nach einer (teil)automatisierten sprachgesteuerten Unterstützung eines Benutzers, die verhältnismäßig effizient und kostengünstig betreibbar ist.

### Darstellung der Erfindung

Dieser Bedarf wird erfindungsgemäß durch eine Informationsvorrichtung gedeckt, wie sie im unabhängigen Patentanspruch 1 definiert ist. Vorteilhafte Ausführungsvarianten der erfindungsgemäßen Informationsvomchtung ergeben sich aus den abhängigen Patentansprüchen.

Das Wesen der Erfindung besteht im Folgenden: Eine Inforznationsvorrichtung zur sprachgesteuerten Unterstützung eines Benutzers umfasst ein Speichermedium, eine Wissensdatenbank, eine Recheneinheit, ein Eingabegerät, Aufzeichnungsmittel und eine Transkriptionseinrichtung. Dabei ist ein vom Eingabegerät erfasstes Signal von den Aufzeichnungsmitteln mittels der Recheneinheit im Speichermedium speicherbar und das Signal von der Transkriptionseinrichtung mittels der Recheneinheit in einen korrespondierenden Text umwandelbar und im Speichemedium speicherbar. Die Informationsvorrichtung weist eine ontologische Analyseeinrichtung auf, mit welcher der Text mittels der Recheneinheit unter Einbezug der Wissensdatenbank kategorisierbar ist und mit welcher der Text unter Einbezug dieser Kategorisierung und der Wissensdatenbank mittels der Recheneinheit aufbereitbar ist. Aufbereitung in diesem Sinne umfasst das Initiieren einer auf den Text angepassten Aktion, wie beispielsweise das Erzeugen einer automatisierten Antwort, das Erzeugen einer automatisierten Frage oder das Verbinden mit einem geeigneten Berater zur weiterem Unterstützung des Benutzers.

Mittels der Verschriftlichung des vom Eingabegerät erfassten und das Anliegen des Benutzers repräsentierenden Signals wird ein weiter verarbeitbarer Text als Arbeitselement erstellt. Dieser Text kann dann von der ontologischen Analyseeinrichtung beispielsweise unter Ausführung einer ontologischen Suche in der Wissensdatenbank aufbereitet werden. In der Wissensdatenbank können Informationen aus dem Geschäftsgebiet des Betreibers der Informationsvorrichtung, wie beispielsweise aus dem Geschäftsgebiet eines Telekommunikationsuntemehmens, in geeigneter Form abgelegt sein. Somit kann der Text effizient und mit einer hohen Qualität spezifisch aufbereitet werden, so dass der Benutzer mit der erfindungsgemäßen Informationsvorrichtung effizient unterstützt werden kann. Beispielsweise kann der Benutzer somit einem gezielt ausgewählten, auf das Anliegen des Benutzers spezialisierten geeigneten Berater verbunden werden. Oder der Benutzer kann mit einer qualifizierten automatisiert generierten Antwort auf sein Anliegen versorgt werden, so dass die Wahrscheinlichkeit, dass der Benutzer abschließend vollautomatisch unterstützt werden kann, erhöht wird.

Vorzugsweise weist das Eingabegerät Mittel zum akustischen Erfassen von Sprache auf und das Signal ist ein Sprachsignal. Das Eingabegerät kann dabei beispielsweise über ein beliebiges verkabeltes oder kabelloses Netzwerk mit einem Benutzergerät, wie beispielsweise einem Telefon, einem Mikrophon oder einem mit einer Sprechgarnitur ausgestatteten Personalcomputer, verbunden sein. Der Benutzer kann dann über das Benutzergerät mit der Informationsvorrichtung interagieren, indem er gesprochene Information als Sprachsignal an das Eingabegerät übersendet. Die erwähnten Mittel des Eingabegeräts können dann das Sprachsignal in einer zur weiteren Verarbeitung geeigneten Form verfügbar machen. Insbesondere kann beispielsweise das Sprachsignal digitalisiert werden und von den Auizeichnungsmitteln in einem vordefinierten digitalen Format abgespeichert werden. Somit ist eine effiziente Verarbeitung des Sprachsignals möglich, was einen effizienten Betrieb der Informationsvorrichtung begünstigen kann.

Bevorzugt umfasst die Informationsvorrichtung eine Benutzerdialogeinrichtung zum automatisierten Betrieb eines Unterstützungsdialogs mit dem Benutzer über das Eingabegerät. Eine solche Benutzerdialogeinrichtung, insbesondere eine Interactive Voice Response Einrichtung (IVR), kann zur ergänzenden Unterstützung des Benutzers, zur parallelen Unterstützung des Benutzers oder zur kombinierten Unterstützung des Benutzers verwendet werden. Dabei kann die IVR beispielsweise mittels Einzelwoitkennung über natürliche Spracherkennung (NLU) oder mittels Dual Tone Multifrequency Dialing (DTMF) mit dem Benutzer interagieren. Zudem kann der Benutzer an einem bestimmten Punkt des Unterstützungsdialogs, zum Beispiel vor einem durch die Informationsvorrichtung ermittelten bevorstehenden Abbruch, zur freien sprachliche Formulierung seines Anliegens aufgefordert werden. Diese freie Formulierung kann dann als Signal von der Informationsvorrichtung verarbeitet und von der ontologischen Anaiyseeinrichtung aufbereitet werden. So kann der Benutzer mit einem qualifizierten geeigneten Betreuer verbunden werden oder er kann eine automatisch erzeugte qualifizierte Antwort auf sein Anliegen erhalten.

Zum Erkennen dieses bestimmten Punkts des Unterstützungsdialogs kann die Informationsvorrichtung im Betrieb laufend abgebrochene Unterstützungen erfassen und mit bestimmten Merkmalen korrelieren, wie beispielsweise mit dem Alter, dem Geschlecht oder einer erkannten Emotion des Benutzers, mit der Uhrzeit, mit der Dauer der Unterstützung, mit der Anzahl Unterstützungen oder mit bestimmten Schlüsselwörtern. Auch kann die Informationsvorrichtung dazu lernfähig ausgestaltet sein, so dass Benutzereingaben im Unterstützungsdialog bezüglich unterschiedlicher Konfidenzen auf Wort- und Satzebene verglichen werden können. Oder die Informationsvorrichtung kann zur Vorhersage der Wahrscheinlichkeit einer abschließenden Unterstützung des Benutzers anhand beobachteter Werte ausgestaltet sein.

Vorzugsweise ist dabei mit der Informationsvorrichtung der Text unter Einbezug des Unterstützungsdialogs der Benutzerdialogeinrichtung von der ontologischen Analyseeinrichtung mittels der Recheneinheit kategorisierbar und der Text unter Einbezug des Unterstützungsdialogs der Benutzerdialogeinrichtung von der ontologische Analyseeinrichtung mittels der Recheneinheit aufbereitbar. Beispielsweise kann der Suchraum einer ontologischen Suche durch die ontologische Analyseeinrichtung mittels der Benutzereingaben im Unterstützungsdialog begrenzt werden. Mit einem solchen Einbezug des Unterstützungsdialogs durch die ontologische Analyseeinrichtung kann die Aufbereitung des Texts effizienter vollzogen werden und auch die Qualität und Effizienz der Unterstützung des Benutzers kann verbessert werden.

Dabei weist die Informationsvorrichtung vorzugsweise Signalerzeugungsmittel zur automatischen Erzeugung des Signals unter Einbezug des Unterstützungsdialogs der Benutzerdialogeinrichtung auf. Mit solchen Signalerzeugungsmitteln kann das Signal automatisiert erzeugt werden, welches dann nach seiner Umwandlung in einen Text wiederum mittels der ontologischen Analyseeinrichtung aufbereitet wird. Entsprechend muss der Benutzer das Signal nicht spezifisch für die ontologische Analyse übermitteln beziehungsweise ausformulieren, sondern er kann auf bekannte Art mittels IVR unterstützt werden und das Signal wird automatisiert ohne zusätzlichen Aufwand für den Benutzer erzeugt. Das Signal, das z.B. eine simulierte längere Benutzeräußerung sein kann, kann beispielsweise aus mehreren im Verlauf des Unterstützungsdialogs in die Benutzerdialogeinrichtung eingegeben kürzeren Benutzeräußerungen erzeugt werden. Dabei kann beispielsweise ein Verfahren zur Konkatenation der einzelnen Benutzeräußerungen und der Anpassung der akustischen Eigenschaften angewendet werden.

Bevorzugt umfasst die Informationsvorrichtung ein Ausgabegerät, wobei der aufbereitete Text von der Transkriptionseinrichtung mittels der Recheneinheit in eine Sprachausgabe synthetisierbar ist, die über das Ausgabegerät ausgebbar ist. Mit einem solchen Text-zu-Sprache-Mechanismus (Text-to-Speech) kann der Benutzer voll- oder halbautomatisch unterstützt werden. Beispielsweise kann dabei eine auf eine vom Benutzer sprachlich frei formulierte Frage eine durch die ontologische Analyseeinrichtung erzeugte Antwort wiederum sprachlich an den Benutzer ausgegeben werden.

Vorzugsweise umfasst die Informationsvorrichtung eine Benutzerdatcnbank, wobei Informationen zum Benutzer und Informationen zum aufbereiteten Text in der Benutzerdatenbank speicherbar sind. Mittels einer solchen Benutzerdatenbank können die Benutzer effizienter betreut werden, da die gespeicherten Informationen bei mehrmalige Unterstützung eines gleichen Benutzers wiederverwertet werden kann.

Ein weiterer Aspekt der Erfindung betrifft ein Verfahren zur sprachgesteuerten Unterstützung eines Benutzers mit einer Informationsvorrichtung, das die Schritte umfasst:
(a) Erfassen eines Signals mit einem Eingabegerät;
(b) Speichern des erfassten Signals in einem Speichermedium mittels einer Recheneinheit;
(c) Umwandeln des gespeicherten Signals durch eine Transkriptionseinrichtung in einen korrespondierenden Text mittels der Recheneinheit;
(d) Speichern des Texts in einem Speichermedium mittels der Recheneinheit,
dadurch gekennzeichnet, dass das Verfahren die Schritte umfasst:
(e) Kategorisieren des Texts unter Einbezug einer Wissensdatenbank durch eine ontologische Analyseeinrichtung mittels der Recheneinheit;
(f) Aufbereiten des Texts unter Einbezug der Kategorisierung und der Wissensdatenbank durch die ontologische Analyseeinrichtung mittels der Recheneinheit.

Die oben aufgeführten Schritte des Verfahrens können dabei auch in einer anderen Reihenfolge erfolgen. Analog zur oben beschriebenen Informationsvorrichtung kann mittels eines solchen Verfahrens der Text effizient und mit einer hohen Qualität erzeugt und aufbereitet werden, so dass der Benutzer mit der erfindungsgemäßen Informationsvorrichtung effizient unterstützt werden kann.

Vorzugsweise umfasst das Verfahren dabei den Schritt des automatisierten Betreibens eines Unterstützungsdialogs mit dem Benutzer mittels einer Benutzerdialogeinrichtung über das Eingabegerät.

Dabei umfasst das Verfahren vorzugsweise den Schritt der automatischen Erzeugung des Signals unter Einbezug des Unterstützungsdialogs der Benutzerdialogeinrichtung, wobei kooperative Benutzereingaben des Unterstützungsdialogs von der Benutzerdialogeinrichtung erkannt werden und für die automatische Erzeugung des Signals verwendet werden, Kooperative Benutzereingaben in diesem Sinne umfassen Eingaben, die neue oder zielgerichtete Informationen des Benutzers enthalten. Diese sind beispielsweise von Eingaben, die aus Fehlleitungen der Benutzerdialogeinrichtung entstehen, zu unterscheiden. Damit kann die Qualität des automatisiert erzeugten Signals erhöht und die Unterstützung des Benutzers verbessert werden.

Das Verfahren umfasst dabei bevorzugt den Schritt des Kategorisierens des Texts unter Einbezug des Unterstützungsdialogs der Benutzerdialogeinrichtung, wobei über Entscheidungsmittel regelbasiert entweder die Kategorisierung des Texts unter Einbezug der Wissensdatenbank durch die ontologische Analyseeinrichtung oder die Kategorisierung des Texts unter Einbezug des Unterstützungsdialogs der Benutzerdialogeinrichtung zur Aufbereitung des Texts durch die ontologische Analyseeinrichtung ausgewählt wird. Die Regeln zu dieser Auswahl können initial festgelegt werden, vorgängig automatisiert aus Unterstützungen der Informationsvonrichtung durch Trainingsbenutzer generiert oder im Betrieb automatisiert aus Unterstützungen der Benutzer generiert.

Vorzugsweise umfasst das Verfahren den Schritt des Speicherns von Informationen über die Durchführung des Verfahrens in der Wissensdatenbank mittels der Recheneinheit.

Der Schritt des Aufbereitens des Texts umfasst vorzugsweise das Durchführen einer onthologischen Suche in der Wissensdaterzbank und die Erzeugung einer Antwort. Mittels einer solchen Ausgestaltung des Verfahrens kann der Benutzer gezielt automatisiert mit einer auf sein Anliegen generierten qualifizierten Antwort versorgt werden. Dies kann die Wahrscheinlichkeit, dass der Benutzer abschließend vollautomatisch unterstützt werden kann, erhöhen und somit eine effiziente Betreuung des Benutzers ermöglichen.

Bevorzugt erzeugt das Verfahren bei der Aufbereitung des Texts mindestens zwei Varianten, die jeweils mit einem durch die ontologische Analyseeinrichtung mittels der Recheneinheit ausgewerteten Hinweis zur selbstständigen Auswahl durch den Benutzer versehen sind. Zur Auswertung dieser Hinweise sind in der Inforinationsvorriclltung beispielsweise erreichbare Ziele und die zur Erfüllung dieser Ziele benötigten weiteren Informationen hinterlegt sowie Informationen bezüglich der Unterstützung anderer Benutzer und von Betreuern. Weiter kann das Verfahren mittels statistischer Algorithmen sich gegenseitig ausschließende fehlerhafte Varianten erkennen. Oder es kann auch mittels statistischer Algorithmen dazu ausgelegt sein, festzustellen, mit welcher Granularität eine fehlerhaft Variante eingrenzbar ist, so dass alle Varianten unterhalb dieser Granularität an den Benutzer übergeben werden.

Ein weiterer anderer Aspekt der Erfindung betrifft ein Computerprogramm zur Durchführung des vorgehend beschriebenen Verfahrens. Mit einem solchen Computerprogramm kann das Verfahren oder Teile davon verhältnismäßig einfach und effizient implementiert werden, beispielsweise in einer Informationsvorrichtung.

### Kurze Beschreibung der Zeichnungen

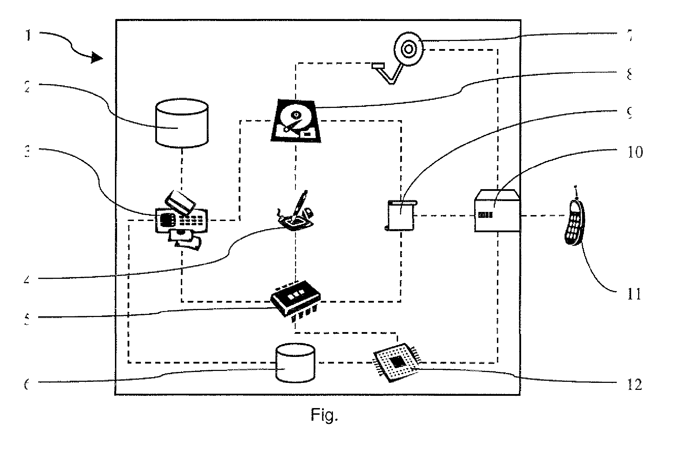

Im Folgenden wird die erfindungsgemäße Informationsvorrichtung unter Bezugnahme auf die beigefügte Zeichnung anhand von Ausführungsbeispielen detaillierter beschrieben. Dabei zeigt die Fig. eine schematische Darstellung eines Ausführungsbeispiels einer erfindungsgemäßen Informationsvorrichtung.

### Weg(e) zur Ausführung der Erfindung

In der Fig. ist ein Ausführungsbeispiel einer erfindungsgemäßen Informationsvorrichtung 1 mit einer Wissensdatenbank 2, einem Speichermedium 8 und einer Recheneinheit 5 gezeigt. Die Informationsvorrichtung 1 kann auf einem oder auf mehreren Computern, als eigene elektronische Schalteinheit oder auf andere geeignete Weise implementiert sein. Das Speichermedium 8 kann unter anderem als Festplattenspeicher, als Arbeitsspeicher (RAM), als virtueller Arbeitsspeicher auf einem Festplattenspeicher, als Festspeicher (ROM) oder als ein sonstiger geeigneter Speicher ausgestaltet sein. Die Wissensdatenbank 2 kann in einem Datenbank-Managementsystem implementiert sein, das im Speichermedium 8 selbst oder in einem weiteren Speichermedium gespeichert ist. Die Recheneinheit 5 kann als Mikrochip, als ein Verbund mehrer Mikrochips, als andere Schaltung oder als eine sonstige geeignete Einheit ausgestaltet sein.

Die Informationsvorrichtung 1 umfasst eine 1/0-Schnittstelle 10 als Eingabegerät und als Ausgabegerät, die mit einem Benutzergerät 11 verbindbar ist. Das Benutzergerät 11 kann beispielsweise ein Festnetztelefon, ein Mobiltelefon, ein Mikrophon, ein Computer, ein persönlicher digitaler Assistent (PDA) oder ein anderes geeignetes Gerät sein. Die I/O-Schnittstelle 10 und das Benutzergerät 11 können über ein verkabeltes oder kabelloses Telefonnetzwerk, wie z.B. ein Public Switched Telephone Network (PSTN), ein Integrated Services Digital Network (ISDN), ein Global System for Mobile Communications (GSM), ein General Packet Radio Service (GPRS), ein Universal Mobile Telecommunications System (UMTS) etc., über ein verkabeltes oder kabelloses Computernetzwerk, wie z.B. ein Local Area Network (LAN), ein Wide Area Network (WAN), ein Wireless Local Area Network (WLAN), eine sonstige geeignete Verbindung oder eine beliebige Kombination verschiedener Verbindungen miteinander verbunden sein.

Mit der I/O-Schnittstelle 10 sind in der Informationsvorrichtung 1 eine IVR (Interactive Voice Response)-Komponente 12 und eine IVR-Datenbank 6 als Benutzerdialogeinrichtung operativ verbunden. Die IVR-Datenbank 6 kann im gleichen Datenbank-Managementsystem implementiert sein wie die Wissensdatenbank oder in einem anderen Datenbank-Managementsystem, das ebenfalls im Speichermedium 8 selbst oder in einem weiteren Speichermedium gespeichert sein kann. Weiter sind mit der I/O-Schnittstelle 10 Aufzeichnungsmittel 9 und eine TTS (Text To Speech)-Komponente 7 einer Transkriptionseinrichtung operativ verbunden, wobei die Transkriptionsvorrichtung ebenfalls eine STT (Speech To Text)-Komponente 4 aufweist. Die Informationsvorrichtung umfasst weiter eine ontologische Analyseeinrichtung 3. Die IVR-Komponente 12, die TTS-Komponente 7 und die TST-Komponente 4 der Transkriptionseinrichtung, die Aufzeichnungsmittel 9 sowie die ontologische Analyseeinrichtung 3 können insbesondere zumindest teilweise jeweils oder beliebig miteinander kombiniert als ein Computerprogramm ausgestaltet sein, wobei die Computerprogramme im Speichermedium 8 oder in einem weiteren Speichermedium gespeichert sein können.

Im Betrieb kann die Informationsvorrichtung 1 insbesondere als Sprachportal zur vollautomatischen oder zumindest halbautomatischen Kundenbetreuung eingesetzt werden, beispielsweise zur Betreuung von Kunden eines Telekommunikationsuntcmehmens. Dabei ist die Informationsvorrichtung zur Betreuung von Kunden auf die Bedürfnisse der Kunden und des Betreibers angepasst konfiguriert. Wird die Informationsvorrichtung beispielsweise zur Betreuung von Kunden eines Telekommumkationsuntemchmens eingesetzt, so umfasst die Wissensdatenbank 2 und/oder die IVR-Datenbank 6 Daten aus der Wissensdomäne des Telekommunikationsuntemehmens und seiner Kunden, die zusätzlich entsprechend strukturiert und organisiert sind.

In einer möglichen Konfiguration der Informationsvorrichtung 1 wird ein über das Benutzergerät 11 getätigter Anruf eines Kunden von der Informationsvorrichtung 1 entgegengenommen und über die I/O-Schnittstelle 10 mit der Benutzerdialogeinrichtung verbunden. Dabei werden auf herkömmliche Art und Weise Anfragen von der IVR-Komponente 12 über das Benutzergerät 11 an den Benutzer übermittelt und darauf werden vom Benutzer über das Benutzergerät 11 übermittelte Signale von der IVR-Komponente 12 erfasst. Diese Signale können beispielsweise DTMF (Dual-tone multifrequency dialing)-Signale, gesprochene Einzelwörter oder auch gesprochene kurze Sätze sein. Die IVR-Komponente 12 wertet die Signale unter Einbezug von in der IVR-Datenbank 6 gespeicherten Daten beispielsweise über eine Kategorisierung des DTMF-Signals oder über eine Kategorisierung mittels NLU (Natural Language Understanding) aus und initiiert einen nächsten Betreuungsschritt zur Unterstützung des Kunden. Dies kann beispielsweise die Übermittlung einer nächsten Anfrage zur weiteren Kategorisierung des Kundenanliegens sein oder die Ausgabe einer passenden vordefinierten gesprochenen Antwort auf das Kundenanliegen. Weiter kann an einem bestimmten Punkt des so generierten Unterstützungsdialogs der Benutzer direkt mit einem anhand der erfolgten Kategorisierung des Kundenanliegens evaluierten Experten des Betreibers verbunden werden.

In einem Schritt des Unterstützungsdialogs, der beispielsweise bereits ganz zu Beginn des Unterstützungsdialogs sein kann oder der vor einem durch Überwachungsmittel detektierten bevorstehenden Abbruch des Unterstützungsdialogs durch den Benutzer sein kann, übermittelt die IVR-Komponente 12 dem Benutzer eine Aufforderung, sein Kundenanliegen frei gesprochen auszuformulieren. Das so in das Benutzergerät 11 gesprochene Kundenanliegen wird von der I/O-Schnittstelle 10 als gesprochenes Signal erfasst. Das gesprochene Signal wird von den Aufzeichnungsmitteln 9 im Speichermedium 5 gespeichert sowie von der STT-Komponente 4 der Transkriptionseinrichtung in geschriebenen Text umgewandelt und im Speichermedium 9 als Text gespeichert. Der gespeicherte Text wird dann von der ontologischen Analyseeinrichtung 3 einer auf die Wissensdomäne des Betreibers angepassten ontologischen Suche mit Hilfe der Wissensdatenbank 2 unterzogen. Das Resultat dieser ontologischen Suche wird dann von der ontologischen Analyseeinrichtung 3 zur Aufbereitung des Texts eingesetzt.

Als Überwachungsmittel kann dabei ein entsprechendes Computerprogramm eingesetzt werden. Dieses kann beispielweise lernfähig ausgestaltet sein, indem es registrierte Abbrüche des Unterstützungsdialogs mit bestimmten Merkmalen korreliert, wie beispielsweise dem Alter des Benutzers, dem Geschlecht des Benutzers, der Uhrzeit, der Dauer des Unterstützungsdialogs, der Anzahl an Unterstützungsdialogen pro Benutzer, bestimmter Schlüsselwörter, einer Hypothese des Spracherkenners, einer Konfidenz der Spracherkenner-Hypathese oder einer erkennbaren Emotion des Benutzers. Das Computerprogramm kann auch dazu ausgestaltet sein, den Benutzer so lange verbunden zu halten, bis die ontologische Analyseeinrichtung 3 den aufbereiteten Text verfügbar hat.

Die Aufbereitung durch die ontologische Analyseeinrichtung 3 kann beispielsweise erfolgen, indem das Kundenanliegen bzw. der Text spezifisch kategorisiert wird, zum Beispiel kann das Kundenanliegen einem Geschäftsprozess des Betreibers zugeordnet werden. Die so erzeugte spezifische Kategorisierung des Kundenanliegens kann beispielsweise wie oben beschrieben entweder zur Ausgabe einer passenden vordefinierten gesprochenen Antwort auf das Kundenanliegen mittels der IVR-Komponente 12 verwendet werden oder zur direkten Verbindung des Benutzers mit einem anhand der erfolgten spezifischen Kategorisierung des Kundenanliegens evaluierten Experten des Betreibers als geeigneten Betreuer. Insbesondere kann die Aufbereitung durch die ontologische Analyseeinrichtung 3 auch so erfolgen, dass eine dem Kundenanliegen entsprechende spezifische Antwort automatisch mit Hilfe der Wissensdatenbank 2 erzeugt wird. Die so erzeugten spezifische Antwort auf das Kundenanliegen kann mittels der TTS-Komponente 7 der Transkriptionseinrichtung wieder zu einem gesprochenen Signal synthetisiert werden, das dann über die I/O-Schnittstelle 10 und über das Benutzergerät 11 an den Benutzer übermittelt wird. Dabei ist es über die automatisierte Erzeugung der spezifischen Antwort mittels der ontologischen Analyseeinrichtung 3 möglich, das Kundenanliegen gezielt zu beantworten ohne mögliche Antworten vorzudefinieren. Auf diese Weise ist eine synchrone vollautomatisierte Betreuung des Kundenanliegen auf einem verhältnismäßig hohen qualitativen Niveau möglich. Außerdem kann die Wahrscheinlichkeit eines Abbruchs des Unterstützungsdialogs durch den Benutzer minimiert werden.

In einer anderen möglichen Konfiguration der Informationsvorrichtung 1 wird ein über das Benutzergerät 11 getätigter Anruf eines Kunden von der Informationsvorrichtung 1 entgegengenommen und über die I/O-Schnittstelle 10 mit der Benutzerdialogeinrichtung verbunden. Dabei werden wiederum auf herkömmliche Art und Weise Anfragen von der IVR-Komponente 12 über das Benutzergerät 11 an den Benutzer übermittelt und vom Benutzer über das Benutzergerät 11 übermittelte Signale von der Informationsvorrichtung 1 erfasst. Die Signale werden ebenfalls von den Aufzeichnungsmitteln 9 im Speichermedium 5 gespeichert. Die STT-Komponente 4 der Transkriptionseinrichtung generiert dann aus den gespeicherten Signalen automatisiert einen geschriebenen Text und speichert diesen im Speichermedium 9. Diese automatisierte Generierung des geschriebenen Texts kann beispielsweise durch gleitende Konkatenation individueller Äußerungen des Benutzers und Anpassungen der akustischen Eigenschaften erfolgen. Oder sie kann auch beispielsweise durch individuelle Erkennung einer partiellen Äußerung und symbolische Kokatenation erfolgen. Der gespeicherte Text wird dann wie oben beschrieben von der ontologischen Analyseeinrichtung 3 einer auf das Wissensgebiet des Betreibers angepassten ontologischen Suche mit Hilfe der Wissensdatenbank 2 unterzogen und entsprechend der weiteren Verwendung aufbereitet.

In weiteren anderen Konfigurationen der Informationsvorrichtung 1 oder in Weiterkonfigurationen der oben beschriebenen Konfigurationen der Informationsvorrichtung 1 können die Signale des Benutzers parallel sowohl von der Benutzerdialogeinrichtung als auch von der Transkriptionseinrichtung zusammen mit der ontologischen Analyseeinrichtung 3 verarbeitet werden. Damit lässt sich die Informationseinrichtung 1 verhältnismäßig effizient nutzen. Auch kann die IVR-Komponente 12 und/oder die ontologische Analyseeinrichtung 3 dem Benutzer eine Auswahl an Antworten auf das Kundenanliegen übermitteln. Dabei kann zusätzlich mittels eines über die ontologische Analyseeinrichtung 3 aufbereiteten Texts eine Hinweisinformation zur Übermittlung an den Benutzer generiert werden, mit der es dem Benutzer ermöglich wird, sein Kundenanliegens selbstständig einzugrenzen.

Weiter können Informationen zu einem Unterstützungsdialog oder zu einer erfolgten Aufbereitung mittels der ontologische Analyseeinrichtung 3 in der Wissensdatenbank 2 und/oder einer Benutzerdatenbank gespeichert werden und bei einer zukünftigen Unterstützung des gleichen Benutzers wieder verwendet werden sowie zur statistischen Auswertung durch den Betreiber verwendet werden. Dies kann beispielsweise erfolgen, indem unter anderem die Position in der Struktur der Daten der Wissensdatenbank 2 und die Version der Daten der Wissensdatenbank 2 gespeichert werden. Oder dies kann beispielsweise auch erfolgen, indem bestimmte Schlüsselwörter des Unterstützungsdialogs extrahiert und gespeichert werden. Auf diese Weise kann ein Benutzer verhältnismäßig effizient mehrere Male von der Informationsvorrichtung 1 unterstützt werden, die Wissensdatenbank 2 kann automatisiert weiterentwickelt werden und der Betreiber kann über die Effizienz der über die Informationsvorrichtung abgewickelter Unterstützungsdialoge informiert werden.

Obwohl die Erfindung mittels der Figur und der zugehörigen Beschreibung dargestellt und detailliert beschrieben ist, ist diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang und den Geist der folgenden Ansprüche zu verlassen. Insbesondere umfasst die Erfindung ebenfalls Ausführungsformen mit jeglicher Kombination von Merkmalen, die vorstehend oder nachfolgend zu verschiedenen Ausführungsformen genannt oder gezeigt sind.

Die Erfindung umfasst ebenfalls einzelne Merkmale in der Figur auch wenn sie dort im Zusammenhang mit anderen Merkmalen gezeigt sind und/oder vorstehend oder nachfolgend nicht genannt sind.

Im Weiteren schließt der Ausdruck "umfassen" und Ableitungen davon andere Elemente oder Schritte nicht aus. Ebenfalls schließt der unbestimmte Artikel "ein" bzw. "eine" und Ableitungen davon eine Vielzahl nicht aus. Die Funktionen mehrerer in den Ansprüchen aufgeführter Merkmale können durch eine einzelne Einheit erfüllt sein. Ein Computerprogramm kann auf einem geeigneten Medium gespeichert sein und/oder vertrieben werden, wie beispielsweise auf einem optischen Speichermedium oder einem Festmedium, das zusammen mit oder als Teil von anderer Hardware bereitgestellt wird. Es kann auch in anderer Form vertrieben werden, wie beispielsweise über das Internet oder andere verkabelte oder unverkabelte Telekommunikationssysteme. Alle Bezugszeichen in den Ansprüchen sind nicht als den Umfang der Ansprüche einschränkend zu verstehen.

## Patentansprüche

1. Informationsvorrichtung (1) zur sprachgesteuerten Unterstützung eines Benutzers, die ein Speichermedium (8), eine Wissensdatenbank (2), eine Recheneinheit (5), ein Eingabegerät (10), Aufzeichnungsmittel (9) und eine Transkriptionseinrichtung (4, 7) umfasst, wobei ein vom Eingabegerät (10) erfasstes Signal von den Aufzeichnungsmitteln (9) mittels der Recheneinheit (5) im Speichermedium (8) speicherbar ist und wobei das Signal von der Transkriptionseinrichtung (4, 7) mittels der Recheneinheit (5) in einen korrespondierenden Text umwandelbar und im Speichermedium (8) speicherbar ist, **dadurch gekennzeichnet, dass** die Informationsvorrichtung (1) eine ontologische Analyseeinrichtung (3) aufweist, mit welcher der Text mittels der Recheneinheit (5) unter Einbezug der Wissensdatenbank (2) kategorisierbar ist und mit welcher der Text unter Einbezug dieser Kategorisierung und der Wissensdatenbank (2) mittels der Recheneinheit (5) aufbereitbar ist.

2. Informationsvorrichtung (1) nach Anspruch 1, bei der das Eingabegerät (10) Mittel zum akustischen Erfassen von Sprache aufweist und bei der das Signal ein Sprachsignal ist.

3. Informationsvorrichtung (1) nach Anspruch 1 oder 2, die eine Benutzerdialogeinrichtung (6, 12) zum automatisierten Betrieb eines Unterstützungsdialogs mit dem Benutzer über das Eingabegerät (10) umfasst.

4. Informationsvorrichtung (1) nach Anspruch 3, mit welcher der Text unter Einbezug des Unterstützungsdialogs der Benutzerdialogeinrichtung (6, 12) von der ontologischen Analyseeinrichtung (3) mittels der Recheneinheit (5) kategorisierbar ist und mit welcher der Text unter Einbezug des Unterstützungsdialogs der Benutzerdialogeinrichtung (6, 12) von der ontologische Analyseeinrichtung mittels der Recheneinheit (5) aufbereitbar ist.

5. Informationsvorrichtung (1) nach Anspruch 3 oder 4, die Signalerzeugungsmittel zur automatischen Erzeugung des Signals unter Einbezug des Unterstützungsdialogs der Benutzerdialogeinrichtung (6, 12) aufweist.

6. Infbrmationsvorrichtung (1) nach einem der vorangehenden Ansprüche, die ein Ausgabegerät (10) umfasst, wobei der aufbereitete Text von der Transkriptionseinrichtung (4, 7) mittels der Recheneinheit (5) in eine Sprachausgabe synthetisierbar ist, die über das Ausgabegerät (10) ausgebbar ist.

7. Informationsvorrichtung (1) nach einem der vorangehenden Ansprüche, die eine Benutzerdatenbank umfasst, wobei Informationen zum Benutzer und Informationen zum aufbereiteten Text in der Benutzerdatenbank speicherbar sind.

8. Verfahren zur sprachgesteuerten Unterstützung eines Benutzers mit einer Informationsvorrichtung (1), das die Schritte umfasst:
(a) Erfassen eines Signals mit einem Eingabegerät (10);
(b) Speichern des erfassten Signals in einem Speichermedium (8) mittels einer Recheneinheit (5);
(c) Umwandeln des gespeicherten Signals durch eine Transkriptionseinrichtung (4, 7) in einen korrespondierenden Text mittels der Recheneinheit (5);
(d) Speichern des Texts in einem Speichermedium (8) mittels der Recheneinheit (5),
**dadurch gekennzeichnet, dass** das Verfahren die Schritte umfasst:
(e) Kategorisieren des Texts unter Einbezug einer Wissensdatenbank (2) durch eine ontologische Analyseeinrichtung (3) mittels der Recheneinheit (5);
(f) Aufbereiten des Texts unter Einbezug der Kategorisierung und der Wissensdatenbank (2) durch die ontologische Analyseeinrichtung (3) mittels der Recheneinheit (5).

9. Verfahren nach Anspruch 8, das den Schritt des automatisierten Betreibens eines Unterstützungsdialogs mit dem Benutzer mittels einer Benutzerdialogeinrichtung (6, 12) über das Eingabegerät (10) umfasst.

10. Verfahren nach Anspruch 9, das den Schritt der automatischen Erzeugung des Signals unter Einbezug des Unterstützungsdialogs der Benutzerdialogeinrichtung (6, 12) umfasst, wobei kooperative Benutzereingaben des Unterstützungsdialogs von der Benutzerdialogcinrichtung (6, 12) erkannt werden und für die automatische Erzeugung des Signals verwendet werden.

11. Verfahren nach Anspruch 9 oder 10, das den Schritt des Kategorisierens des Texts unter Einbezug des Unterstützungsdialogs der Benutzerdialogeinrichtung (6, 12) umfasst, wobei über Entscheidungsmittel regelbasiert entweder die Kategorisierung des Texts unter Einbezug der Wissensdatenbank (2) durch die ontologische Analyseeinrichtung (3) oder die Kategorisierung des Texts unter Einbezug des Unterstützungsdialogs der Benutzerdialogeinrichtung (6, 12) zur Aufbereitung des Texts durch die ontologische Analyseeinrichtung (3) ausgewählt wird.

12. Verfahren nach einem der Ansprüche 8 bis 11, das den Schritt des Speicherns von Informationen über die Durchführung des Verfahrens in der Wissensdatenbank (2) mittels der Recheneinheit (5) umfasst.

13. Verfahren nach einem der Ansprüche 8 bis 12, bei dem der Schritt des Aufbereitens des Texts das Durchführen einer onthologischen Suche in der Wissensdatenbank (2) und die Erzeugung einer Antwort umfasst.

14. Verfahren nach einem der Ansprüche 8 bis 13, das im Schritt des Aufbereitens des Texts mindestens zwei Varianten erzeugt, die jeweils mit einem durch die ontologische Analyseeinrichtung (3) mittels der Recheneinheit (5) ausgewerteten Hinweis zur selbstständigen Auswahl durch den Benutzer versehen sind.

15. Computerprogramm zur Durchführung des Verfahrens nach einem der Ansprüche 8 bis 14.
